# EUROPÄISCHE PATENTSCHRIFT

(11) **EP 3 129 623 B1**
(45) Veröffentlichungstag und Bekanntmachung des Hinweises auf die Patenterteilung: **27.03.2019**
(21) Anmeldenummer: 15733662.9
(22) Anmeldetag: 22.06.2015
(51) Int. Cl.: F02C 7/22, F23K 5/18

(54) **GASTURBINENANLAGE MIT VORRICHTUNG ZUM SPÜLEN UND/ODER SPERREN WENIGSTENS EINES BRENNERS UND VERFAHREN ZUM SPÜLEN UND/ODER SPERREN WENIGSTENS EINES BRENNERS EINER DERARTIGEN GASTURBINENANLAGE**
GAS TURBINE PLANT WITH DEVICE FOR PURGING AND/OR BLOCKING AT LEAST ONE BURNER OF A GAS TURBINE PLANT AND METHOD FOR PURGING AND/OR BLOCKING AT LEAST ONE BURNER OF SUCH A GAS TURBINE PLANT
INSTALLATION DE TURBINE À GAZ AVEC UN DISPOSITIF DE BALAYAGE ET/OU DE BLOCAGE D'AU MOINS UN BRÛLEUR ET PROCÉDÉ DE BALAYAGE ET/OU DE BLOCAGE D'AU MOINS UN BRÛLEUR D'UNE TELLE INSTALLATION DE TURBINE À GAZ

(30) Priorität: 02.07.2014 DE 102014212824
(43) Veröffentlichungstag der Anmeldung: 15.02.2017
(73) Patentinhaber: Siemens Aktiengesellschaft, 80333 München (DE)
(72) Erfinder: WARUSCHEWSKI, Andreas, 46242 Bottrop (DE); BELKAHLA, Ismail, 45665 Recklinghausen (DE); ERTLE, Volker, 45529 Hattingen (DE); GALANAKIS, Kirjiakos, 58456 Witten (DE); SCHYMETZKO, Gülsen, 45470 Muelheim an der Ruhr (DE); SMITH, James, 46348 Raesfeld (DE); WÜNSCHE, Patrick, 47829 Krefeld (DE)
(86) Internationale Anmeldenummer: PCT/EP2015/063964
(87) Internationale Veröffentlichungsnummer: WO 2016/000995

(56) Entgegenhaltungen:
- EP-A2- 2 309 187
- DE-A1- 3 916 477

## Beschreibung

Die vorliegende Erfindung betrifft eine Gasturbinenanlage mit wenigstens einem Brenner, einem Verdichter und mit einer Spül- und/oder Sperrvorrichtung zum Zuführen eines Spül- und/oder Sperrfluids zu dem wenigstens einen Brenner, wobei die Spül- und/oder Sperrvorrichtung einen Druckspeicher und eine Aufwärmeinrichtung umfasst und wobei der Druckspeicher mit dem wenigstens einen Brenner über eine erste Fluidleitung unter Zwischenschaltung der Aufwärmeinrichtung verbunden ist.

Eine derartige Gasturbinenanlage ist z.B. aus der DE 39 16 477 A1 bekannt.

Darüber hinaus betrifft die Erfindung ein Verfahren zum Spülen und/oder Sperren wenigstens eines Brenners einer solchen Gasturbinenanlage.

Gasturbinenanlagen weisen häufig mehrere Brennerstufen auf, wobei jede Brennerstufe individuell mit Brennstoff versorgt werden kann. Unterschiedliche Brennerstufen können dabei durch unterschiedliche Brennstoffdüsen in einem Brenner realisiert sein, oder dadurch, dass jeder Brennerstufe wenigstens ein eigener Brenner zugeordnet ist. Je nach Last der Gasturbinenanlage sind unterschiedliche Brennerstufen in Betrieb. Beispielsweise bei Teillast oder beim An- oder Abfahren einer Gasturbinenanlage sind typischerweise nicht alle Brennerstufen in Betrieb. Nicht im Betrieb befindliche Brennerstufen werden in der Regel gesperrt, um den Eintritt heißer Verbrennungsgase aus der Brennkammer in die Brennerstufe zu verhindern. Wenn die Brennerstrufen zuvor in Betrieb waren, werden sie zudem gespült, um vom vorherigen Betrieb noch vorhandene Brennstoffreste im Brennstoffzufuhrsystem und den Brennern zu entfernen.

Aufgabe der vorliegenden Erfindung ist es, eine vorteilhafte Spül- und/oder Sperrvorrichtung zum Zuführen eines Spül- und/oder Sperrfluids zu wenigstens einem Brenner einer Gasturbinenanlage zur Verfügung zu stellen.

Eine weitere Aufgabe der vorliegenden Erfindung ist es, ein vorteilhaftes Verfahren zum Spülen und/oder Sperren wenigstens eines Brenners einer Gasturbinenanlage zur Verfügung zu stellen.

Die erste Aufgabe wird durch eine Gasturbine nach Anspruch 1 gelöst, die zweite Aufgabe durch ein Verfahren zum Spülen und/oder Sperren wenigstens eines Brenners einer Gasturbinenanlage nach Anspruch 8. Die abhängigen Ansprüche enthalten vorteilhafte Ausgestaltungen der Erfindung.

Das Dokument DE 39 16 477 A1 zeigt die Merkmale des Oberbegriffs von Anspruch 1.

Die Spül- und/oder Sperrvorrichtung zum Zuführen eines Spül- und/oder Sperrfluids zu dem wenigstens einen Brenner der erfindungsgemäßen Gasturbinenanlage umfasst einen Druckspeicher und eine Aufwärmeinrichtung, wobei der Druckspeicher mit dem wenigstens einen Brenner über eine erste Fluidleitung unter Zwischenschaltung der Aufwärmeinrichtung verbunden ist. Die Aufwärmeinrichtung umfasst einen in der ersten Fluidleitung angeordneten Wärmetauscher und den Verdichter umfasst, wobei der Verdichter über eine zweite Fluidleitung mit dem Wärmetauscher in Verbindung steht.

Bei bisherigen Spül- und/oder Sperrvorrichtungen zum Zuführen eines Spül- und/oder Sperrfluids zu wenigstens einem Brenner einer Gasturbinenanlage besteht keine Möglichkeit, das Spül- und/oder Sperrfluid in seinem Druckgefälle und/oder seiner Temperatur an den zum Spülen und/oder Sperren eines Brenners optimalen Druck- und Temperaturbereich anzupassen. Mit der Spül- und/oder Sperrvorrichtung wird dies nun möglich. Der Druckbehälter ermöglicht hierbei, das gewünschte Druckgefälle am Brennerausgang beim Spülen bzw. Sperren des Brenners zu generieren, da der Druck im Druckbehälter auf einen entsprechend geeigneten Druck eingestellt werden kann und/oder das dem Behälter entnommene Fluid geeignet gedrosselt werden kann. Außerdem ermöglicht die Aufwärmeinrichtung das Vorwärmen des dem Brenner zugeführten Spül- und/oder Sperrfluids auf die Temperatur des Brenners, wodurch Temperaturschocks vermieden werden können. Insgesamt verringert die Spül- und/oder Sperrvorrichtung daher die Belastungen des Brenners beim Spülen und/oder Sperren, wodurch die Lebensdauer des Brenners verlängert werden kann.

Die Aufwärmeinrichtung umfasst einen in der ersten Fluidleitung angeordneten Wärmetauscher und einen Verdichter der Gasturbinenanlage, wobei der Verdichter einen Verdichterausgang aufweist, der über eine zweite Fluidleitung mit dem Wärmetauscher in Verbindung steht. Auf diese Weise kann dem Verdichter während des Betriebs entnommene verdichtete - und aufgrund der Verdichtung aufgewärmte- Verdichterluft dazu verwendet werden, das Spülfluid im Wesentlichen auf die Temperatur der Verdichterluft zu bringen, so dass beim Übergang vom Betrieb des Brenners zum Spülen und/oder Sperren des Brenners, also beim Wechsel vom Durchströmen des Brenners mit Verdichterluft zum Durchströmen des Brenners mit Spül- und/oder Sperrfluid, kein Temperaturschock entsteht.

Um im Druckspeicher ein definiertes Druckniveau einstellen zu können, ist es vorteilhaft, wenn dem Druckspeicher ein Kompressor zugeordnet ist, der den Druck eines im Druckspeicher vorhandenen Fluids auf einem definierten Druckniveau hält. Der definierte Druck im Druckspeicher kann so auch bei einer Entnahme von Fluid zum Spülen und/oder Sperren auf dem definierten Niveau gehalten werden.

Gemäß einer weiteren vorteilhaften Ausgestaltung der Erfindung kann sich zwischen dem Druckspeicher und der Aufwärmeinrichtung eine einstellbare Drosselvorrichtung in der ersten Fluidleitung befinden. Mit der Drosselvorrichtung kann die Menge an dem wenigstens einen Brenner aus dem Druckbehälter zugeführten Spül- und/oder Sperrfluid eingestellt werden.

Vorteilhafterweise ist in der zweiten Fluidleitung eine Einrichtung zum Einstellen des durch die Fluidleitung strömenden Volumenstroms vorhanden. Diese Einrichtung kann beispielsweise durch eine Blende, insbesondere durch eine Blende mit einem einstellbaren Blendendurchmesser oder eine Wechselblende, realisiert sein. Durch Einstellen des vom Verdichter kommenden, durch den Wärmetauscher strömenden Volumenstroms lässt sich die Heizleistung des Wärmetauschers für das Aufwärmen des Spül- und/oder Sperrfluids geeignet einstellen. Die Blende ist dem Wärmetauscher vorteilhafterweise in Strömungsrichtung der vom Verdichter kommenden Verdichterluft nachgeschaltet, um vor dem Durchgang durch den Wärmetauscher eine Abkühlung der Verdichterluft aufgrund der Expansion beim Durchgang durch die Blende zu vermeiden.

Bevorzugt weist die zweite Fluidleitung einen Fluidleitungsabschnitt auf, der sich von dem Wärmetauscher zu der ersten Fluidleitung erstreckt und an einer Mündungsstelle in die erste Fluidleitung mündet. Dabei befindet sich die Mündungsstelle in der ersten Fluidleitung zwischen dem Wärmetauscher und dem wenigsten einen Brenner. Dies eröffnet die Möglichkeit, Verdichterluft als Alternative zu dem im Druckspeicher befindlichen Fluid als Spül- und/oder Sperrfluid zu verwenden, wobei die erste Fluidleitung dann vorzugsweise abgesperrt ist, um beim Strömen der Verdichterluft durch den Wärmetauscher einen Wärmeverlust aufgrund von Wärmeübertragung auf in der ersten Fluidleitung strömendes Fluid zu vermeiden. In dieser Ausgestaltung der Spül- und/oder Sperrvorrichtung ist es vorteilhaft, wenn eine etwaige vorhandene Einrichtung zum Einstellen des durch die zweite Fluidleitung strömenden Volumenstroms wie beispielsweise die zuvor beschriebene Blende der Mündungsstelle in Strömungsrichtung der vom Verdichter kommenden Verdichterluft nachgeschaltet ist. Dadurch kann vermieden werden, dass Verdichterluft, die dem wenigstens einen Brenner als Spül- und/oder Sperrluft zugeführt wird, vor der Zufuhr zum Brenner aufgrund einer Expansion beim Durchtritt durch die Blendenöffnung abgekühlt wird. Auf diese Weise kann weitgehend sichergestellt sein, dass die Verdichterluft beim Spülen und/oder Sperren des Brenners im Wesentlichen dieselbe Temperatur aufweist wie beim vorangegangenen Betrieb des Brenners.

Erfindungsgemäß wird außerdem ein Verfahren zum Spülen und/oder Sperren wenigstens eines Brenners einer erfindungsgemäßen Gasturbinenanlage zur Verfügung gestellt. In dem Verfahren findet zum Spülen und/oder Sperren des wenigstens einen Brenners im Druckspeicher befindliches Fluid Verwendung, wobei das Fluid insbesondere Druckluft sein kann. Das Fluid wird vor der Zufuhr zu dem wenigstens einen Brenner in der Aufwärmeinrichtung der erfindungsgemäßen Gasturbinenanlage vorgewärmt. Wie weiter oben mit Bezug auf die Spül- und/oder Sperrvorrichtung bereits erläutert worden ist, kann durch das Vorwärmen des Spül- und/oder Sperrfluids ein Temperaturschock beim Wechsel von regulärem Betrieb eines Brenners zu Spülbetrieb des Brenners vermieden werden. Zudem kann mit Hilfe des Druckspeichers ein definierter Druckabfall über den Brenner während des Spül- und/oder Sperrgangs bereitgestellt werden. Wenn der Druckspeicher stets auf einem definierten Druckniveau gehalten wird, kann der definierte Druckabfall zudem während des gesamten Spül- und/oder Sperrvorgangs aufrecht erhalten werden.

In einer Weiterbildung des erfindungsgemäßen Verfahrens, in der die Gasturbinenanlage einen Verdichter umfasst, wird Verdichterluft zum Spülen und/oder Sperren des wenigstens einen Brenners verwendet, wenn der vom Verdichter zur Verfügung gestellte Druck zum Spülen und/oder Sperren des wenigstens einen Brenners ausreicht. Andernfalls, das heißt wenn der vom Verdichter zur Verfügung gestellte Druck zum Spülen und/oder Sperren des wenigstens einen Brenners nicht ausreicht, wird aus dem Druckspeicher entnommenes und mittels der Aufwärmeinrichtung vor der Zufuhr zu dem wenigstens einen Brenner vorgewärmtes Fluid zum Spülen und/oder Sperren des wenigstens einen Brenners verwendet. In dieser Ausgestaltung des Verfahrens kann bei einer Anzahl von Betriebszuständen der Gasturbinenanlage Verdichterluft als Spül- und/oder Sperrfluid Verwendung finden. Lediglich bei Betriebszuständen, bei denen der Verdichterdruck nicht ausreicht, um das gewünschte Druckgefälle über den Brenner zu generieren, findet das im Druckspeicher gespeicherte Spül- und/oder Sperrfluid Verwendung. Auf diese Weise kann mit einem relativ geringen Vorrat an Spül- und/oder Sperrfluid im Druckbehälter gearbeitet werden.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
Figur 1 zeigt eine Gasturbinenanlage in einer stark schematisierten Darstellung.
Figur 2 zeigt eine Gasturbinenanlage mit einem ersten Ausführungsbeispiel für die Spül- und/oder Sperrvorrichtung.
Figur 3 zeigt eine Gasturbinenanlage mit einem zweiten Ausführungsbeispiel für die Spül- und/oder Sperrvorrichtung.

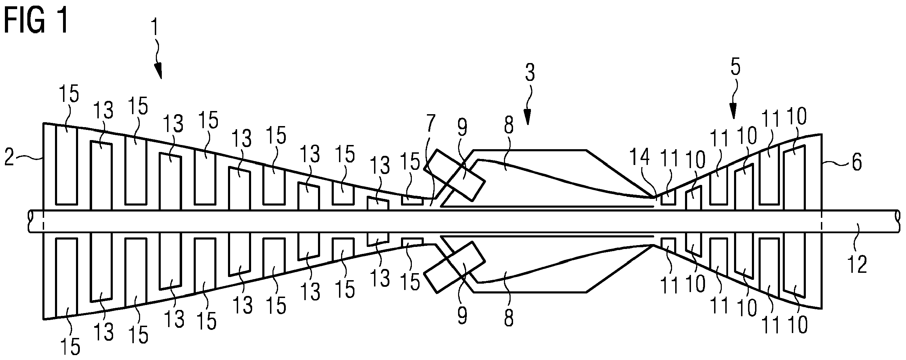

Nachfolgend wird mit Bezug auf Figur 1 der grundsätzliche Aufbau einer Gasturbinenanlage erläutert. Die Figur zeigt die Gasturbinenanlage stark schematisiert und lässt viele Einzelheiten, die für das Verständnis der vorliegenden Erfindung ohne Bedeutung sind, der Übersichtlichkeit halber weg. Die in Figur 1 gezeigte Gasturbinenanlage umfasst einen Verdichter 1 mit einem Verdichtereingang 2, durch den Umgebungsluft in den Verdichter eintreten kann, einen Brennkammerabschnitt 3 und eine Turbine 5 mit einem Turbinenausgang 6. Die Anlage bildet einen Strömungspfad vom Verdichtereingang 2 zum Turbinenausgang 6, wobei ein Brennerplenum 4 strömungstechnisch mit einem Verdichterausgang 7 und über Brenner 9 und Brennkammern 8 mit einem Turbineneingang verbunden ist.

Im Betrieb der Gasturbinenanlage wird vom Verdichter 1 verdichtete Luft durch das Brennerplenum 4 den Brennern 9 zugeführt. In den Brennern 9 wird die zugeführte Luft mittels ebenfalls zugeführtem Brennstoff, der ein flüssiger oder ein gasförmiger Brennstoff sein kann, vermischt und das Gemisch entzündet und verbrannt, wodurch heiße und unter Druck stehende Abgase entstehen, die dann als Arbeitsmedium für die strömungstechnisch nachgeschaltete Turbine 5 dienen. Beim Durchströmen der Turbine 5 zum Turbinenausgang 6 hin entspannt das Arbeitsmedium und kühlt ab, wobei Impuls auf Turbinenschaufeln 10, die auf einer Welle 12 angeordnet sind, übertragen wird. Dieser Impuls versetzt die Welle in Rotation, so dass mit Hilfe der rotierenden Welle 12 beispielsweise ein Generator oder eine Arbeitsmaschine (nicht dargestellt) angetrieben werden kann. Um die Strömung in der Turbine 5, und damit die Impulsübertragung auf die Turbinenschaufeln 10, zu optimieren sind in der Turbine 5 stationäre Leitschaufeln 11 vorhanden, die zur Lenkung des Massenstroms an Arbeitsmedium dienen.

Außerdem wird im vorliegenden Ausführungsbeispiel mit Hilfe der rotierenden Welle 12 der Verdichter 1 angetrieben. In diesem befinden sich rotierende Verdichterschaufeln 13, mit deren Hilfe durch den Verdichtereingang 2 eingesaugte Luft durch einen sich verjüngenden Strömungspfad gezwungen und dadurch verdichtet wird. Auch im Verdichter 1 sind Leitschaufeln 15 vorhanden, die ebenfalls zur Lenkung der Strömung der in den Verdichter eingetretenen Luft dienen, um den Verdichterprozess zu optimieren.

Während des Betriebs einer Gasturbine wird also vom Verdichter 1 verdichtete Luft den Brennern 9 zugeführt, um dort als Oxidationsmittel für die Verbrennung des Brennstoffes zu dienen und zusammen mit dem Brennstoff in Form von Verbrennungsabgasen das Arbeitsmedium für die Turbine 5 zu bilden. Um Gasturbinenanlagen mit unterschiedlichen Lasten betreiben zu können, findet häufig ein Konzept mit mehreren Brennerstufen Verwendung, wobei die einzelnen Brennerstufen individuell mit Kraftstoff versorgt werden können. Die Brennerstufen können hierbei durch unterschiedliche, individuell mit Brennstoff zu versorgende Brennstoffdüsen innerhalb eines Brenners realisiert sein oder durch eine Anzahl von individuell mit Brennstoff zu versorgenden Brennern. Im vorliegenden Ausführungsbeispiel sind sie durch individuell mit Brennstoff zu versorgenden Brenner realisiert.

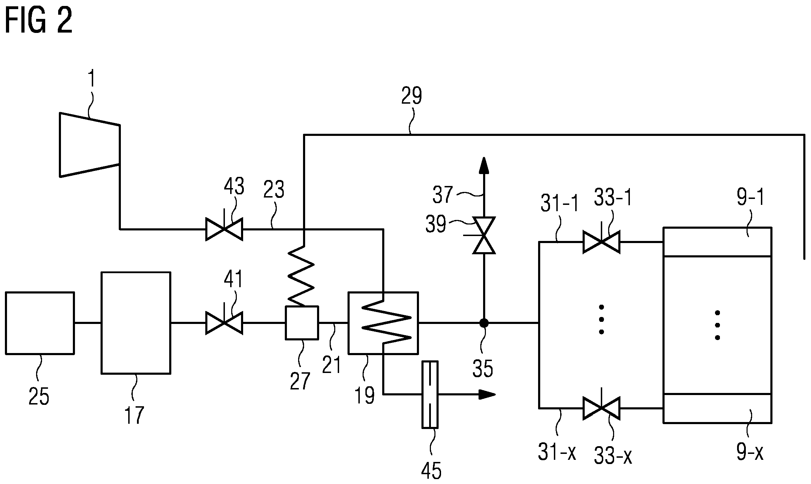

Im Betrieb der Gasturbinenanlage mit unterschiedlichen Lasten können eine Brennerstufen abgeschaltet werden, insbesondere dann, wenn die Gasturbine unter Teillast betrieben wird oder die Gasturbine an- oder abgefahren wird. Die in derartigen Lastzuständen nicht mit Brennstoff versorgten Brennerstufen werden dann gespült, um in den entsprechenden Brennern und den zugehörigen Brennstoffleitungen verbliebenen Brennstoff aus den Brennern und den Leitungen zu spülen. Außerdem werden die Brenner und/oder mittels eines aus den Brennerstufen austretenden Sperrfluids gegen den Eintritt von heißen Verbrennungsabgasen aus den Brennkammern in die Brenner gesperrt. Ein erstes Ausführungsbeispiel für eine entsprechende Spül- und/oder Sperrvorrichtung wird nachfolgend mit Bezug auf Figur 2 beschrieben.

Die in Figur 2 gezeigte Spül- und/oder Sperrvorrichtung umfasst einen Druckspeicher 17, einen Wärmetauscher 19, eine erste Fluidleitung 21, die sich vom Druckspeicher 17 zu den Brennern 9-1 bis 9-x erstreckt sowie eine zweite Fluidleitung 23, die sich vom Verdichter 1 zum Wärmetauscher 19 und darüber hinaus erstreckt. Die erste Fluidleitung 21 dient zu Zufuhr eines unter Druck stehenden Fluids, das im vorliegenden Ausführungsbeispiel Druckluft ist, aus dem Druckspeicher 17 zu den Brennern 9-1 bis 9-x, um diese mit Hilfe der zugeführten Druckluft zu spülen und/oder zu sperren. Um die einzelnen Brenner 9-1 bis 9-x, die in der in Figur 2 gezeigten Ausführungsvariante einzelne Brennerstufen darstellen, individuell mit Spül- und/oder Sperrfluid vorsorgen zu können, zweigt die erste Fluidleitung 21 in Strömungsrichtung gesehen nach dem Wärmetauscher 19 in Zweigleitungen 31-1 bis 31-x auf, in denen sich individuell betätigbare Absperrventile 33-1 bis 33-x befinden.

Im vorliegenden Ausführungsbeispiel ist der Druckbehälter 17 mit einem externen Kompressor 25 verbunden, um die Druckluft im Druckbehälter 17 auf einen definierten Druck zu halten zu können. In der ersten Fluidleitung 21 ist außerdem eine Drossel 27 angeordnet, mit deren Hilfe der Druck in der Fluidleitung 21 eingestellt werden kann. Die Drosselung kann entweder mechanisch oder elektronisch auf der Basis der Gasturbinenleistung erfolgen. Die Drossel 27 ist hierzu über eine geeignete Signalleitung mit einer die Gasturbinenleistung als Ausgangssignal ausgebenden Einrichtung verbunden. Wenn den Brennern 9-1 bis 9-x Druckluft aus dem Druckbehälter 17 als Spül- und/oder Sperrfluid zugeführt wird, erfolgt mit Hilfe der Drossel 27 ein Einstellen eines geeigneten Druckniveaus im Hinblick auf den in der Brennkammer oder den Brennkammern herrschenden Brennkammerdruck und mit Hilfe des Wärmetauschers 19 ein Vorwärmen auf im Wesentlichen dieselbe Temperatur wie die Verdichterluft, um den von dem Spül- und/oder Sperrfluid durchströmenden Brenner auf einem im Wesentlichen gleichen Temperaturniveau wie die von Verdichterluft durchströmten Brenner zu halten und dadurch zu hohe Temperaturgradienten beim Wechsel vom regulären Betrieb zum Spül- und/oder Sperrbetrieb zu vermeiden.

Wenn eine oder mehrere Brennerstufen 9-1 bis 9-x zum Spülen und/oder Sperren mit Druckluft aus dem Druckbehälter 17 versorgt werden, wird der geeignete Druck in der zu den entsprechenden Brennern führenden Fluidleitung mit Hilfe der Drossel 27 eingestellt, und mit Hilfe des Wärmetauschers 19 erfolgt ein Erwärmen der Druckluft auf ein im Wesentlichen der Temperatur der Verdichterluft entsprechenden Temperatur. Der Wärmetauscher bildet somit zusammen mit dem Verdichter 1 der Gasturbinenanlage eine Aufwärmvorrichtung zum Erwärmen des Spül- und/oder Sperrfluids. Es sei an dieser Stelle darauf hingewiesen, dass die Wärme zum Erwärmen des Spül- und/oder Sperrfluids nicht notwendigerweise aus Verdichterluft stammen muss. Andere Aufwärmvorrichtungen, beispielsweise elektrisch oder verbrennungstechnisch betriebene Aufwärmvorrichtungen, können ebenso zum Einsatz kommen.

Um in der Fluidleitung befindliches unter Druck stehendes Spül- und/oder Sperrfluid ablassen zu können, befindet sich zwischen dem Wärmetauscher 19 und den zu den Brennern 9-1 bis 9-x führenden Zweigleitungen 31-1 bis 31-x ein Abzweigpunkt 35, von dem aus eine weitere Zweigleitung 37 mit einem darin angeordneten Absperrventil 39 abzweigt. Absperrventile befinden sich zudem auch zwischen dem Druckspeicher 17 und der Drossel 27 in der ersten Fluidleitung 21 (Absperrventil 41) sowie zwischen dem Verdichter 1 und dem Wärmetauscher 19 in der zweiten Fluidleitung 23 (Absperrventil 43).

Wenn einem oder mehreren der Brenner 9-1 bis 9-x Spül- und/oder Sperrfluid aus dem Druckbehälter 17 zugeführt wird, sind das Absperrventil 41, das Absperrventil 43 und die Absperrventile 33-1 bis 33-x in den zu den entsprechenden Brennern 9-1 bis 9-x führenden Zweigleitungen 31-1 bis 31-x geöffnet. Das Absperrventil 39 in der Zweigleitung 37 ist dagegen geschlossen. Wenn keinem der Brenner 9-1 bis 9-x Spül- und/oder Sperrfluid zugeführt werden soll, sind die Absperrventile 31 und 43 sowie die Absperrventile 33-1 bis 33-x geschlossen und das Absperrventil 39 in der Zweigleitung 37 ist offen, um den Druck aus dem Leitungsabschnitt der ersten Fluidleitung 21, der sich zwischen dem Absperrventil 41 und den Absperrventilen 33-1 bis 33-x befindet, abzulassen.

Wenn einem oder mehreren der Brenner 9-1 bis 9-x Spül- und/oder Sperrfluid aus dem Druckbehälter 17 zugeführt wird, hängt die zur Erwärmung des Spül- und/oder Sperrfluids notwendige Wärmemenge davon ab, wie viele Brenner 9-1 bis 9-x mit Spül- und/oder Sperrfluid versorgt werden sollen. Zum Einstellen einer geeigneten im Wärmetauscher 19 übertragenen Wärmemenge befindet sich in der zweiten Fluidleitung 23 eine Blende 45 mit einstellbarem Blendendurchmesser. Diese Blende 45 befindet sich in einem Abschnitt der zweiten Fluidleitung, der sich in Strömungsrichtung der Verdichterluft durch die zweite Fluidleitung 23 gesehen hinter dem Wärmetauscher 19 befindet. Beim Durchtritt der Verdichterluft durch die Blende 45 tritt nicht nur eine Begrenzung des Volumenstroms auf, sondern aufgrund ihrer Eigenschaft als Engstelle führt die Blende auch zu einer Expansion und somit zu einer Abkühlung der hindurchtretenden Verdichterluft. Durch die Anordnung der Blende 45 in Strömungsrichtung hinter dem Wärmetauscher ist sichergestellt, dass die Temperatur der Verdichterluft im Wärmetauscher der Temperatur der dem Brennerplenum 4 zugeführten Verdichterluft weitgehend entspricht.

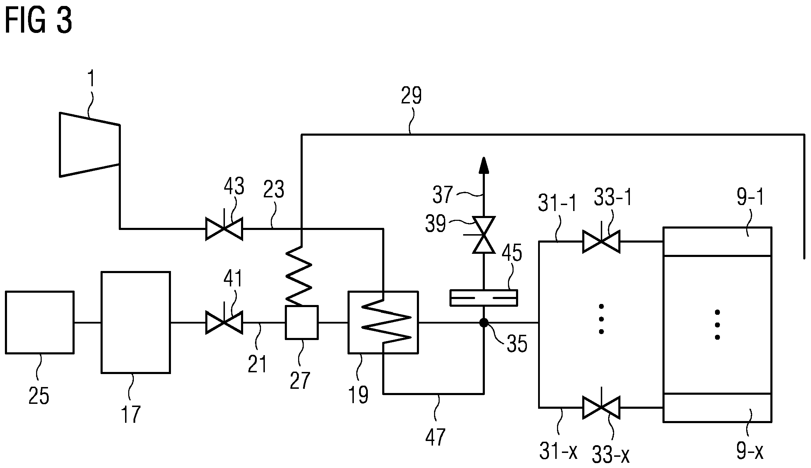

Mit der in Figur 2 dargestellten Ausführungsvariante der Spül- und/oder Sperrvorrichtung wird die Verdichterluft in der Spül- und/oder Sperrvorrichtung lediglich zum Aufwärmen der aus dem Druckbehälter 17 entnommenen Druckluft verwendet. Die Zufuhr des Spül- und/oder Sperrfluids erfolgt stationär aus dem Druckspeicher 17. Eine Ausführungsvariante der Spül- und/oder Sperrvorrichtung, in der den Brennern 9-1 bis 9-x auch Verdichterluft als Spül- und/oder Sperrfluid zugeführt werden kann, wird nachfolgend mit Bezug auf Figur 3 beschrieben. Elemente des zweiten Ausführungsbeispiels die Elementen des ersten Ausführungsbeispiels entsprechen, sind in Figur 3 mit denselben Bezugsziffern wie in Figur 2 bezeichnet und werden nicht noch einmal beschrieben, um Wiederholungen zu vermeiden.

Die zweite Ausführungsvariante der Spül- und/oder Sperrvorrichtung unterscheidet sich von der ersten Ausführungsvariante lediglich dadurch, dass die zweite Fluidleitung 23 einen Fluidleitungsabschnitt 47 aufweist, über den sie in Strömungsrichtung gesehen nach dem Wärmetauscher 19 in die erste Fluidleitung 21 mündet. Im vorliegenden Ausführungsbeispiel mündet die zweite Fluidleitung 23 mit dem Fluidleitungsabschnitt 47 in den Abzweigpunkt 35. Über den in die erste Fluidleitung 21 mündenden Fluidleitungsabschnitt 27 kann der ersten Fluidleitung 21 Verdichterluft zugeführt werden, die dann anstelle der aus dem Druckspeicher 17 stammenden Druckluft über die Zweigleitungen 31-1 bis 31-x wenigstens einem der Brenner 9-1 bis 9-x als Spül- und/oder Sperrfluid zugeführt werden kann.

Die in Figur 3 gezeigte Ausführungsvariante der Spül- und/oder Sperrvorrichtung ermöglicht es, wahlweise Verdichterluft oder in dem Druckspeicher 17 gespeicherte Druckluft als Spül- und/oder Sperrfluid zu verwenden. Es lässt sich dann ein Verfahren zum Spülen und/oder Sperren wenigstens eines Brenners realisieren, indem vom Verdichter 1 abgezapfte Verdichterluft über die zweite Zweigleitung 23 den zu spülenden und/oder zu sperrenden Brennern zugeführt wird, wenn das Druckniveau in der die zweite Zweigleitung 23 bildenden Anzapfleitung des Verdichters 1 für den Spül- und/oder Sperrvorrichtung ausreicht, also höher ist als in der Brennkammer, in die der zu spülende und/oder zu sperrende Brenner mündet. Falls der Druck in der zweiten Fluidleitung 23 zum Spülen und/oder Sperren des Brenners bzw. der Brenner nicht ausreicht, findet ein Spülen und/oder Sperren statt mit Hilfe abgezapfter Verdichterluft mit Hilfe aus dem Druckspeicher 17 entnommener Druckluft statt.

Die vorliegende Erfindung wurde anhand von Ausführungsbeispielen zu Erläuterungszwecken beschrieben. Im Rahmen der Erfindung sind jedoch Abweichungen von den Ausführungsbeispielen möglich. Beispielswese kann statt einer Blende mit einstellbarer Blendenöffnung eine Blendenvorrichtung mit einer Anzahl verschiedener in den Verdichterluftstrom einbringbarer Blenden wie etwa ein Blendenrad Verwendung finden. Die vorliegende Erfindung soll daher nicht als auf in den Ausführungsbeispielen beschriebene Merkmalskombinationen beschränkt angesehen werden. Vielmehr soll die Erfindung durch die beigefügten Ansprüche definiert sein.

## Patentansprüche

1. Gasturbinenanlage mit wenigstens einem Brenner, einem Verdichter und mit einer Spül- und/oder Sperrvorrichtung zum Zuführen eines Spül- und/oder Sperrfluids zu dem wenigstens einen Brenner (9), wobei die Spül- und/oder Sperrvorrichtung einen Druckspeicher (17) und eine Aufwärmeinrichtung (1, 19) umfasst und wobei der Druckspeicher (17) mit dem wenigstens einen Brenner (9) über eine erste Fluidleitung (21) unter Zwischenschaltung der Aufwärmeinrichtung (1, 19) verbunden ist,
**dadurch gekennzeichnet, dass**
die Aufwärmeinrichtung (1, 19) einen in der ersten Fluidleitung angeordneten Wärmetauscher (19) und den Verdichter (1) umfasst, wobei der Verdichter (1) über eine zweite Fluidleitung (23) mit dem Wärmetauscher in Verbindung steht.

2. Gasturbinenanlage nach Anspruch 1,
**dadurch gekennzeichnet, dass**
in der zweiten Fluidleitung (23) eine Einrichtung (45) zum Einstellen des durch die zweite Fluidleitung (23) strömenden Volumenstroms vorhanden ist.

3. Gasturbinenanlage nach Anspruch 2,
**dadurch gekennzeichnet, dass**
die Einrichtung (45) zum Einstellen des durch die zweite Fluidleitung (23) strömenden Volumenstroms dem Wärmetauscher (19) nachgeschaltet ist.

4. Gasturbinenanlage nach einem der Ansprüche 1 bis 3,
**dadurch gekennzeichnet, dass**
die zweite Fluidleitung (23) einen Fluidleitungsabschnitt (47) aufweist, der sich von dem Wärmetauscher (19) zu der ersten Fluidleitung (21) erstreckt und an einer Mündungsstelle (35) in die erste Fluidleitung (21) mündet, wobei sich die Mündungsstelle (35) in der ersten Fluidleitung (21) zwischen dem Wärmetauscher (19) und dem wenigstens einen Brenner (9) befindet.

5. Gasturbinenanlage nach einem der Ansprüche 1 bis 4,
**dadurch gekennzeichnet, dass**
die Spül- und/oder Sperrvorrichtung außerdem ein erstes Verriegelungsventil (41) und ein zweites Verriegelungsventil (43) aufweist, wobei das erste Verriegelungsventil (41) in der ersten Fluidleitung (21) zwischen dem Druckspeicher (17) und dem Wärmetauscher (19) angeordnet ist, und das zweite Verriegelungsventil (43) in der zweiten Fluidleitung (23) zwischen dem Verdichter (1) und dem Wärmetauscher (19) angeordnet ist.

6. Gasturbinenanlage nach einem der Ansprüche 1 bis 5,
**dadurch gekennzeichnet, dass**
dem Druckspeicher (17) ein Kompressor (25) zugeordnet ist, der den Druck eines im Druckspeicher (17) befindlichen Fluids auf einem definierten Druckniveau hält.

7. Gasturbinenanlage nach einem der Ansprüche 1 bis 6,
**dadurch gekennzeichnet, dass**
zwischen dem Druckspeicher (17) und der Aufwärmeinrichtung (1, 19) eine einstellbare Drosselvorrichtung (27) in der ersten Fluidleitung (21) vorhanden ist.

8. Verfahren zum Spülen und/oder Sperren wenigstens eines Brenners (9) einer Gasturbinenanlage nach einem der Ansprüche 1 bis 7, in dem zum Spülen und/oder Sperren des wenigstens einen Brenners (9) im Druckspeicher (17) befindliches Fluid Verwendung findet, das vor der Zufuhr zu dem wenigstens einen Brenner (9) in der Aufwärmeinrichtung (1, 19) vorgewärmt wird.

9. Verfahren nach Anspruch 8, in dem das Fluid im Druckspeicher (17) stets auf einem definierten Druckniveau gehalten wird.

10. Verfahren nach Anspruch 8 oder Anspruch 9, in dem eine Drosselung des Fluids erfolgt, bevor dieses zu dem wenigstens einen Brenner (9) geleitet wird.

11. Verfahren nach einem der Ansprüche 8 bis 10, in dem die Gasturbinenanlage einen Verdichter (1) umfasst, und in dem
- Verdichterluft zum Spülen und/oder Sperren des wenigstens einen Brenners (9) Verwendung findet, wenn der vom Verdichter (1) zur Verfügung gestellte Druck zum Spülen und/oder Sperren des wenigstens einen Brenners (9) ausreicht, und
- aus dem Druckspeicher (17) entnommenes und mittels der Aufwärmeinrichtung (1, 19) vor der Zufuhr zu dem wenigstens einen Brenner (9) vorgewärmtes Fluid zum Spülen und/oder Sperren des wenigstens einen Brenners (9) Verwendung findet, wenn der vom Verdichter (1) zur Verfügung gestellte Druck zum Spülen und/oder Sperren des wenigstens einen Brenners (9) nicht ausreicht.

## Claims

1. Gas turbine plant having at least one burner , a compressor and having a purging and/or sealing apparatus for conveying a purging and/or sealing fluid to the at least one burner (9), wherein the purging and/or sealing apparatus comprises a pressure accumulator (17) and a heating device (1, 19), and wherein the pressure accumulator (17) is connected to the at least one burner (9) via a first fluid line (21), with the heating device (1, 19) connected therebetween, **characterized in that** the heating device (1, 19) comprises a heat exchanger (19) arranged in the first fluid line and the compressor (1), wherein the compressor (1) is connected to the heat exchanger via a second fluid line (23).

2. Gas turbine plant according to Claim 1, **characterized in that** in the second fluid line (23) there is a device (45) for setting the volumetric flow through the second fluid line (23) .

3. Gas turbine plant according to Claim 2, **characterized in that** the device (45) for setting the volumetric flow through the second fluid line (23) is connected downstream of the heat exchanger (19).

4. Gas turbine plant according to one of Claims 1 to 3, **characterized in that** the second fluid line (23) has a fluid line section (47) which extends from the heat exchanger (19) to the first fluid line (21) and opens into the first fluid line (21) at a mouth (35), wherein the mouth (35) is located in the first fluid line (21), between the heat exchanger (19) and the at least one burner (9).

5. Gas turbine plant according to one of Claims 1 to 4, **characterized in that** the purging and/or sealing apparatus also has a first shutoff valve (41) and a second shutoff valve (43), wherein the first shutoff valve (41) is arranged in the first fluid line (21) between the pressure accumulator (17) and the heat exchanger (19), and the second shutoff valve (43) is arranged in the second fluid line (23) between the compressor (1) and the heat exchanger (19).

6. Gas turbine plant according to one of Claims 1 to 5, **characterized in that** the pressure accumulator (17) is assigned a compressor (25) which keeps a fluid in the pressure accumulator (17) at a defined pressure.

7. Gas turbine plant according to one of Claims 1 to 6, **characterized in that** an adjustable throttle device (27) is present in the first fluid line (21), between the pressure accumulator (17) and the heating device (1, 19).

8. Method for purging and/or sealing at least one burner (9) of a gas turbine plant according to one of Claims 1 to 7, in which fluid in the pressure accumulator (17) is used for purging and/or sealing the at least one burner (9), which fluid is preheated, in the heating device (1, 19), before it is conveyed to the at least one burner (9).

9. Method according to Claim 8, in which the fluid in the pressure accumulator (17) is always kept at a defined pressure.

10. Method according to Claim 8 or Claim 9, in which the fluid is throttled before it is conveyed to the at least one burner (9) .

11. Method according to one of Claims 8 to 10, in which the gas turbine plant comprises a compressor (1), and in which
- compressor air is used for purging and/or sealing the at least one burner (9) if the pressure provided by the compressor (1) is sufficient for purging and/or sealing the at least one burner (9), and
- fluid taken from the pressure accumulator (17) and preheated by means of the heating device (1, 19) before it is conveyed to the at least one burner (9) is used for purging and/or sealing the at least one burner (9) if the pressure provided by the compressor (1) is insufficient for purging and/or sealing the at least one burner (9).

## Revendications

1. Installation de turbine à gaz, comprenant au moins un brûleur, un compresseur et un système de balayage et/ou de blocage, pour envoyer un fluide de balayage et/ou de blocage au au moins un brûleur (9), le système de balayage et/ou de blocage comprenant un accumulateur (17) de pression et un dispositif (1, 19) de chauffage, l'accumulateur (17) de pression communiquant avec le au moins un brûleur (9) par un premier conduit (21) pour du fluide avec interposition du dispositif (1, 19) de chauffage,
**caractérisée en ce que**
le dispositif (1, 19) de chauffage comprend un échangeur de chaleur (19) monté dans le premier conduit pour du fluide et le compresseur (1), le compresseur (1) étant en communication avec l'échangeur de chaleur par un deuxième conduit (23) pour du fluide.

2. Installation de turbine à gaz suivant la revendication 1, **caractérisée en ce que**
il y a, dans le deuxième conduit (23) pour du fluide, un dispositif (45) de réglage du courant en volume passant dans le deuxième conduit (23) pour du fluide.

3. Installation de turbine à gaz suivant la revendication 2, **caractérisée en ce que**
le dispositif (45) de réglage du courant en volume passant dans le deuxième conduit (23) pour du fluide est monté en aval de l'échangeur de chaleur (19).

4. Installation de turbine à gaz suivant l'une des revendications 1 à 3,
**caractérisée en ce que**
le deuxième conduit (23) pour du fluide a un tronçon (47), qui s'étend de l'échangeur de chaleur (19) au premier conduit (21) pour du fluide et qui débouche dans le premier conduit (21) pour du fluide en un point (35) d'embouchure, le point (35) d'embouchure, dans le premier conduit (21) pour du fluide, se trouvant entre l'échangeur de chaleur (19) et le au moins un brûleur (9).

5. Installation de turbine à gaz suivant l'une des revendications 1 à 4,
**caractérisée en ce que**
le système de balayage et/ou de blocage a, en outre, une première vanne (41) de verrouillage et une deuxième vanne (43) de verrouillage, la première vanne (41) de verrouillage étant montée dans le premier conduit (21) pour du fluide entre l'accumulateur (17) de pression et l'échangeur de chaleur (19), et la deuxième vanne (43) de verrouillage étant montée dans le deuxième conduit (23) pour du fluide entre le compresseur (1) et l'échangeur de chaleur (19).

6. Installation de turbine à gaz suivant l'une des revendications 1 à 5,
**caractérisée en ce qu'**
à l'accumulateur (17) de pression est associé un compresseur (25), qui maintient à un niveau de pression défini la pression d'un fluide se trouvant dans l'accumulateur (17) de pression.

7. Installation de turbine à gaz suivant l'une des revendications 1 à 6,
**caractérisée en ce qu'**
il y a un système (27) d'étranglement réglable dans le premier conduit (21) pour du fluide entre l'accumulateur (17) de pression et le dispositif (1, 19) de chauffage.

8. Procédé de balayage et/ou de blocage d'au moins un brûleur (9) d'une installation de turbine à gaz suivant l'une des revendications 1 à 7, dans lequel, pour balayer et/ou pour bloquer le au moins un brûleur (9), on utilise du fluide, qui se trouve dans l'accumulateur (17) de pression et qui est préchauffé dans le dispositif (1, 19) de chauffage avant d'être envoyé au au moins un brûleur (9).

9. Procédé suivant la revendication 8, dans lequel on maintient le fluide dans l'accumulateur (17) de pression constamment à un niveau de pression défini.

10. Procédé suivant la revendication 8 ou la revendication 9, dans lequel un étranglement du fluide s'effectue avant d'envoyer celui-ci au au moins un brûleur (9).

11. Procédé suivant l'une des revendications 8 à 10, dans lequel l'installation de turbine à gaz comprend un compresseur (1) et dans lequel
- on utilise l'air du compresseur pour balayer et/ou bloquer le au moins un brûleur (9), si la pression mise à disposition par le compresseur (1) suffit pour le balayage et/ou le blocage du au moins un brûleur (9) et
- on utilise du fluide prélevé de l'accumulateur (17) de pression et préchauffé au moyen du dispositif (1, 19) de chauffage avant l'envoi au au moins un brûleur (9) pour le balayage et/ou le blocage du au moins un brûleur (9), si la pression mise à disposition par le compresseur (1) ne suffit pas pour le balayage et/ou le blocage du au moins un brûleur (9).
